# EUROPÄISCHE PATENTSCHRIFT

(11) **EP 0 707 920 B1**
(45) Veröffentlichungstag und Bekanntmachung des Hinweises auf die Patenterteilung: **02.12.1998**
(21) Anmeldenummer: 95114368.4
(22) Anmeldetag: 13.09.1995
(51) Int. Cl.: B23K 26/04

(54) **Kompakter Laserbearbeitungskopf zur Lasermaterialbearbeitung mit integrierter on-line-Bahnkontrolle**
Compact laser processing head for laser processing of material, with an integrated on-line track control
Tête d'usinage au laser compacte pour l'usinage de matériaux au laser, avec une commande de guidage en ligne intégrée

(30) Priorität: 21.09.1994 DE 4433675
(43) Veröffentlichungstag der Anmeldung: 24.04.1996
(73) Patentinhaber: FRAUNHOFER-GESELLSCHAFT ZUR FÖRDERUNG DER ANGEWANDTEN FORSCHUNG E.V., 80636 München (DE); Dr. Klaus Barthel Sensorsysteme GmbH, 82024 Taufkirchen (DE); Schwabe, Walter, Dr., 09227 Einsiedel (DE); Maschinenfabrik Arnold GmbH & Co. KG, 88214 Ravensburg (DE)
(72) Erfinder: Wiedemann, Günter,Dr., D-01237 Dresden (DE); Grüneberg, Dirk, Dipl.-Ing., D-16775 Menz (DE); Morgenthal, Lothar, Dr., D-01187 Dresden (DE); Schwabe, Walter, Dr., D-09113 Chemnitz (DE); Barthel, Klaus, Dr. rer. nat., D-80796 München (DE); Gnann, Rüdiger Arnold, D-88214 Ravensburg (DE)

(56) Entgegenhaltungen:
- EP-A- 0 348 531
- PATENT ABSTRACTS OF JAPAN vol. 10, no. 191 (M-495) [2247] , 4.Juli 1986 & JP-A-61 037392 (MITSUBISHI ELECTRIC CORP), 22.Februar 1986,

## Beschreibung

Die Erfindung betrifft einen kompakten Laserbearbeitungskopf zur Lasermaterialbearbeitung mit integrierter on-line-Bahnkontrolle, insbesondere für lasergestützte Materialbearbeitungsverfahren mit CNC-gesteuerten Portalmaschinen bzw -robotern zur 2D- und 3D-Laserbearbeitung gemäß dem Oberbegriff des Anspruchs 1. Ihre Anwendung ist besonders zweckmäßig und sinnvoll beim Laserstrahlschneiden, -schweißen und bei den Verfahren der Oberflächenveredlung.

Es ist einerseits allgemein bekannt, daß Laserbearbeitungsverfahren, wie beispielsweise die Oberflächenbehandlung oder das Laserstrahlschweißen und -schneiden, eine hohe Genauigkeit der Positionierung des geformten bzw. fokussierten Laserstrahles auf die Oberfläche der zu bearbeitenden Bauteile erfordern. Das gilt sowohl für die zu bearbeitenden bzw. zu erzeugenden Konturen, als auch für den Fokussabstand und die Laserstrahlrichtung.

Andererseits sind Bauteile mit komplizierten Geometrien und/oder durch Umformen hergestellte Werkstücke immer mit Form- und Maßtoleranzen behaftet und es können außerdem auch während der Bearbeitung Verformungen auftreten.

Mit erheblichem Aufwand zum Richten und Spannen der Teile, wie beispielsweise beim Laserstrahlschweißen von Serienbauteilen praktiziert, kann man zwar dieses Problem begrenzen, jedoch nicht ganz beseitigen. Darüberhinaus ist dabei aber eine wesentliche Erhöhung der Verfahrenskosten und eine merkliche Einschränkung der Flexibilität der Laserbearbeitung zu verzeichnen.

Allerdings entsteht bei der Laserbearbeitung von Bauteilen mit komplizierter Geometrie immer ein hoher Programmieraufwand, da in der Regel jedes Teil individuell im Teach-in-Verfahren programmiert wird, was hohe Maschinenrüstzeiten zur Folge hat (Bakowski, L. et.al."3-D-Laserschneiden ohne zu warten", Laser-Praxis, Supplement zu Hanser Fachzeitschriften September, Carl Hanser Verlag München, 1992, S.LS 103-105 / Rollbühler, G. "Lohnende Alternative zur Handarbeit", Laser-Praxis, Supplement zu Hanser Fachzeitschriften Juni, Carl Hanser München, 1992, S. LS 8-9 / Stratmann K. "Kombinieren rechnet sich" Laser-Praxis, Supplement zu Hanser Fachzeitschriften September, Carl Hanser Verlag München, 1993, S. LS 99-102). Aufgrund dieser Probleme, die erhebliche Hemmnisse bei der weiteren Verbreitung der 3-D-Laserbearbeitung darstellen, sind der Erweiterung des Anwendungsfeldes der 3-D-Laserbearbeitung enge Grenzen gesetzt.

Es wurde daher versucht, diese Probleme mittels Sensortechnik zu lösen. Wie bereits in Biermann, S. "Der Abstand bleibt gleich" Laser-Praxis, Supplement zu Hanser Fachzeitschriften September, Carl Hanser Verlag München, 1992, S. LS 74-76 und in "Sensoranwendung und Qualitätssicherung in der Laserbearbeitung", Seminarunterlagen Institut für Werkzeugmaschinen und Betriebswissenschatten der TU München, 1993, beschrieben, wird derzeit beim Laserstrahlschneiden die Abstandsregelung erfolgreich eingesetzt. Für den Robotereinsatz sind beispielsweise Lösungen für die Nahtverfolgung bekannt, wo Meßsignale über Regelkreise auf eine oder mehrere Achsen zurückwirken.

Eine neuere Lösung für NC-gesteuerte Portalmaschinen, die sowohl zur Geometrieerkennung als auch zur Konturverfolgung eingesetzt wird, basiert auf der intelligenten Verknüpfung kommerzieller Anlagenkomponenten durch ein spezielles Interface. Dabei wird in der Regel der Sensorkopf an den zur Ausführung der jeweiligen Aufgabe genutzte Bearbeitungskopf zusätzlich fest angeflanscht (Sensoranwendung und Qualitätssicherung in der Laserbearbeitung in Seminarunterlagen des Instituts für Werkzeugmaschinen und Betriebswissenschaften der TU München 1993 und "Scout sorgt für Präzision" in Laser, Juni 1993).

Diese neuere Lösung hat für die Belange der Lasermacromaterialbearbeitung den Nachteil, daß diese Sensoren, die ja ein zusätzliches Bauelement darstellen, den Arbeitsraum begrenzen und somit hinsichtlich der Zugänglichkeit, insbesondere bei Innenkonturen, erhebliche Einschränkungen bewirken. Dieser Effekt wird durch zusätzliche Schlauch- und Kabelanschlüsse, die bei den meisten Lasermacromaterialbearbeitungsverfahren erforderlich sind, weiter verstärkt.

Ein weiterer Nachteil dieser neueren Lösung besteht darin, daß hier die Sensoren in der Regel ungeschützt den allgemein bei der Laserbearbeitung auftretenden Umgebungsbedingungen (Dämpfe, Gase, Sublimate, Plasma, Spritzer, Wärme u.a.) ausgesetzt sind. Durch derartige Ablagerungen wird aber die Detektionssicherheit erheblich beeinträchtigt.

Darüberhinaus ist bei dieser neueren Lösung von Nachteil, daß der Anbau des Sensors meist nicht reproduzierbar gestaltet werden kann, was den Justieraufwand drastisch erhöht.

Es wirkt sich bei dieser neueren Lösung ebenfalls nachteilig aus, daß im Regelfall bei kommerziellen Sensoren keine Möglichkeit der Sensorkühlung vorgesehen ist, was deren Einsatzmöglichkeiten in derartigen Laserbearbeitungsköpfen stark einschränkt.

Während bei richtungsunabhängigen Laserbearbeitungsverfahren, wie beispielsweise beim 3-D-Laserschneiden mit koaxialer Gasstrahlführung, fünf gesteuerte Bewegungsachsen (z.B. drei Linear- und zwei Drehachsen) für eine volle 3-D-Fähigkeit ausreichen, benötigt ein im Vorlauf arbeitender Sensor zur Geometrieerfassung im Raum eine weitere Achse zur Drehung des Sensors um die Werkzeugachse (Laserstrahlachse) zu seiner Orientierung, analog richtungsabhängiger Laserbearbeitungsverfahren, wie beispielsweise Schweißen mit Off-axis-Düsen und/oder Zuführung von Zusatzwerkstoffen oder Härten mit geformten Laserstrahl. Aus diesem Grund besteht ein weiterer wesentlicher Nachteil der neueren Lösung in der starken Einschränkung der Funktionalität bzw. dem gänzlichen Verlust der uneingeschränkten 3-D-Fähigkeit des Systems.

Ein schwerwiegender Nachteil der bekannten Lösungen zur Geometrieerfassung und/oder Konturverfolgung besteht darin, daß die gemessenen Positionswerte ohne erforderliche Bewertung zur Verarbeitung kommen und somit eine fehlerhafte Bearbeitung nicht ausgeschlossen ist. Eine Relation zu Bahnsollwerten, die aus CAD-Systemen oder von maßgenau bearbeiteten Musterteilen bekannt sind, werden nicht hergestellt.

Die Aufgabe der Erfindung besteht nunmehr darin, einen Laserbearbeitungskopf zur Lasermaterialbearbeitung, insbesondere zur Lasermacromaterialbearbeitung vorzuschlagen, der sämtliche Nachteile der Lösungen des Standes der Technik nicht aufweist bzw. diese auf ein Minimum begrenzt.

Es ist somit Aufgabe der Erfindung, einen Laserbearbeitungskopf der eingangs genannten Art anzugeben, durch dessen Einsatz einer Erweiterung des Anwendungsfeldes der 3-D-Laserbearbeitung keine engen Grenzen mehr gesetzt sind, der Programmieraufwand bzw. die Rüstzeiten bei der Laserbearbeitung von Bauteilen mit komplizierter Geometrie wesentlich abgesenkt wird und zur Bahnkontrolle die gemessenen Bahndaten mit vorab bekannten Sollbahndaten während der Bearbeitung zur Prozeßbeeinflussung verarbeitet werden.

Desweiteren ist es Aufgabe der Erfindung, einen Laserbearbeitungskopf der eingangs genannten Art vorzuschlagen, durch dessen Verwendung der Arbeitsraum nicht mehr begrenzt wird und somit hinsichtlich der Zugänglichkeit, insbesondere bei Innenkonturen, keine Einschränkungen mehr bewirken.

Darüberhinaus ist es Aufgabe der Erfindung, einen wie eingangs beschriebenen Laserbearbeitungskopf aufzuzeigen, bei dem die Sensoren nicht ungeschützt den allgemein bei der Laserbearbeitung auftretenden Umgebungsbedingungen (Dämpfe, Gase, Sublimate, Plasma, Spritzer, Wärme u.a.) ausgesetzt sind.

Eine weitere Aufgabe der Erfindung besteht darin, einen Laserbearbeitungskopf der eingangs genannten Art zu entwickeln, bei dem der Anbau des sensors stets reproduzierbar gestaltet werden kann, bei dem somit der Justieraufwand, im Vergleich zu Laserbearbeitungsköpfen gemäß dem Stand der Technik, wesentlich abgesenkt werden kann und der in unkomplizierter Weise den Einsatz von kommerziellenSensoren uneingeschränkt erlaubt.

Schließlich ist es noch Aufgabe der Erfindung, einen Laserbearbeitungskopf der eingangs beschriebenen Art anzugeben, mit dessen Einsatz die volle 3-D-Fähigkeit des Systems erhalten bleibt.

Erfindungsgemäß werden die Aufgaben mit einem Laserbearbeitungskopf gemäß einem oder mehreren der Ansprüche von 1 bis 12 gelöst.

Dabei besteht der kompakte Laserbearbeitungskopf zur Lasermaterialbearbeitung mit integrierter on-line-Bahnkontrolle, insbesondere für lasergestützte Macromaterialbearbeitungsverfahren, wie beispielsweise Schneiden, Schweißen, Oberflächenveredlungsverfahren mit CNC-gesteuerten Portalmaschinen bzw. Portalrobotern, zur 2-D- und 3-D-Laserbearbeitung, aus einem Sensor zur Geometrieerfassung und/oder Konturverfolgung, einem oder mehreren Spiegeln und/oder Spiegelsystemen mit Spiegelgehäuse und Spiegelhalter, einer definierten Schnittstelle zum Strahlführungssystem der Maschine, den erforderlichen Einrichtungen und Anschlüssen für Wasserleitung und Prozeßgasführung, einem oder mehreren Crossjet-Systemen, den erforderlichen Justiereinrichtungen und Prozeß- bzw. Arbeitsgasdüsen, sowie den notwendigen auf der Motorplatine montierten Antriebseinrichtungen zur Realisierung der Drehbewegung des Sensors, wie ein NC-gesteuerter Motor und Getriebe, sowie der erforderlichen Strom-, - Signal- und Medienleitungen. Erfindungsgemäß ist bei diesem kompakten Laserbearbeitungskopf der Sensor zur Geometrieerfassung und/oder Konturverfolgung vollständig konstruktiv mit in dem Laserbearbeitungskopf integriert und gemeinsam mit anderen an die Bearbeitungsrichtung gebundenen Zusatzeinrichtungen des Laserbearbeitungskopfes um die Sensordrehachse drehbar gelagert.

Weiterhin enthält erfindungsgemäß der Laserkopf einen Protokollspeicher (B) und eine Vergleichereinheit (D), die derart angeordnet und verbunden sind, daß die Daten des Sensors (7) parallel zur Steuerung des Bearbeitungsvorganges mit den Daten eines Protokollspeichers (B) in einer Vergleichereinheit (D) zum Zwecke der Qualitätskontrolle und Beeinflussung des Bearbeitungsvorgangs verglichen und ausgewertet werden können.

Zur Erhöhung der Störsicherheit ist es vorteilhaft, wenn ein Bahnspeicher zwischen Datenausgang des Sensors und Dateneingang der Steuerung und dem Dateneingang der Vergleichereinheit angeordnet ist, so daß die Daten des Sensors gespeichert und bewertet werden, bevor sie der Steuerung und der Vergleichereinheit zugeführt werden.

Es ist weiterhin vorteilhaft, wenn der Eingang des Protokollspeichers direkt mit den Sensordaten verbunden ist, und somit der Inhalt des Protokollspeichers von einem Masterteil bestimmt wird.

Es hat sich weiterhin als günstig erwiesen, den Protokollspeicher, die Vergleichereinheit und/oder den Bahnspeicher mit in die CNC-Steuerung zu integrieren.

Es ist dabei von Vorteil, wenn der Sensor zur Geometrieerfassung und/oder Konturverfolgung und die an die Bearbeitungsrichtung gebundenen Zusatzeinrichtungen (beispielsweise Off-axis-Düsen, Zusatzwerkstoffördereinrichtungen oder dergleichen) des Laserbearbeitungskopfes um mindestens 360° drehbar um die Sensordrehachse gelagert sind.

Günstigerweise sollte dabei die Sensordrehachse definiert zur Werkzeugachse, beispielsweise derart, daß die Sensordrehachse mit dem Lot im Zentrum des Laserspots übereinstimmt, angeordnet sein, wobei diese Anordnung so gestaltet sein sollte, daß die Sensordrehachse räumlich durch Verschieben und/oder Verkippen zur Werkzeugachse justierbar ist. Dadurch wird es möglich, den ansonsten vorhandenen Einfluß von insbesondere bei langen Strahlwegen auftretenden Lagetoleranzen der Strahlachse zur mechanischen Achse auf die Genauigkeit der Detektion und der Bearbeitung auszuschalten.

Vorteilhafterweise sollte der Sensor zur Geometrieerfassung und/oder Konturverfolgung, der vorzugsweise ein optoelektronischer Sensor, beispielsweise ein SCOUT-Sensor®, ist, zur Sensordrehachse justierbar angeordnet sein.

Weiterhin ist von Vorteil, wenn die Bauelemente des Sensors zur Geometrieefassung und/oder Konturverfolgung platzsparend in das Gefäßsystem des Bearbeitungskopfes integriert sind, was beispielsweise durch eine entsprechende Dimensionierung erreicht werden kann. Dabei sollte der Sensor zur Geometrieerfassung und/oder Konturverfolgung so dimensioniert sein, daß die Schnittstelle zur Maschine neben den für den Laserbearbeitungskopf notwendigen Funktionen auch die für den Sensor enthält, und bzw. so daß alle Schutzmaßnahmen für die Optik, für die Bauelemente des Bearbeitungskopfes und für die Bauelemente des Sensors gleichermaßen wirken.

Zur weiteren Verbreiterung des Anwendungsfeldes des erfindungsgemäßen Laserbearbeitungskopfes sollte die Möglichkeit eingeräumt werden, daß an der Sensordrehachse neben dem Sensor zur Geometrieerfassung und/oder Konturverfolgung selbst noch weitere Sensoren z.B. für die automatische Kontrolle des Bearbeitungsergebnisses befestigt sein können.

Günstigerweise sollten alle notwendigen Bauelemente und Bestandteile, incl. des Sensors zur Geometrieerfassung und/oder Konturverfolgung, des Laserbearbeitungskopfes so dimensioniert sein, daß sie alle in einem einzigen Gehäuse mit für den jeweiligen Anwendungsfall vertretbarem Ausmaßen angeordnet werden können.

Dem erfindungsgemäßen kompakten Laserbearbeitungskopf liegt zugrunde
- eine definierte mechanische Schnittstelle zur Strahlführung, die sowohl die reproduzierbare Zuordnung von Strahlachse, Bearbeitungskopf und Sensor als auch die Medienführung beeinhaltet,
- ein oder mehrere in den Bearbeitungskopf neben den optischen Bauelementen zur Strahlfokussierung und/oder -formung, der Gasführung, den Düsensystemen, Einrichtungen zur Kühlung der Optiken und Düsen, Einrichtungen zum Schutz, insbesondere der optischen Bauelemente, und dergleichen einschließlich der Strom-, Signal- und Medienleitungen platzsparend integrierte(r) Sensor(en) zur Geometrierfassung und/oder Konturverfolgung, sowie im Bedarfsfall weiterer Sensoren oder Sensorsysteme,
- eine um die Werkzeugachse (Laserstrahlachse) drehbare Anordnung eines Teiles des bzw. des gesamten Laserbearbeitungskopfes, so daß sich das Gesichtsfeld des Sensors im Vorlauf und die ebenfalls zur Bearbeitungsrichtung definiert anzuordnenden Einrichtungen (z.B. Off-axis-Düsen, Fördereinrichtungen für Zusatzwerkstoffe) definiert um den Laserstrahl drehen und sich damit zur jeweiligen Vorschubrichtung orientieren können.

Mit dem erfindungsgemäßen kompakten Laserbearbeitungskopf werden sämtliche Nachteile der Lösungen des Standes der Technik beseitigt. Folgende Verbesserungen gegenüber den Lösungen des Standes der Technik sind dabei hervorzuheben:
- Überwachung der vom Sensor gemessenen Bahnpositionen durch Vergleich mit den abgespeicherten Sollbahndaten und sofortiger Beeinflussung des Bearbeitungsprozesses,
- Gewährleistung der vollen Funktionalität der sensorgesteuerten 3D-Geometrieerfassung und Konturverfolgung an CNC-gesteuerten Portalmaschinen,
- Führung des Werkzeuges, des Laserstrahles, aller Medien und des Sensors oder der Sensoren bzw. Sensorsysteme in einem einzigen kompakten Gehäuse,
- reproduzierbare, justierbare Anordnung bzw. Zuordnung des Sensors zum Werkzeug,
- kein Justieraufwand bei Bearbeitungskopfwechsel durch eine für Werkzeug und Sensor bzw. Sensoren einheitliche Schnittstelle,
- der/die Sensor/en ist/sind integriert in das Kühlsystem der Optik und ggf. weiterer Zusatzeinrichtungen für die Bearbeitung, und integriert in das Schutzsystem für optische Bauelemente des Laserbearbeitungskopfes, z.B. Schutzfenster, Crossjets usw.,
- keine Behinderung durch zusätzliche Kabel und Schläuche,
- die Bauelemente des Bearbeitungskopfes sind bereits bei der Montage justierbar und brauchen nicht vor jedem Einsatz des Bearbeitungskopfes neu justiert werden,
- zusätzliche mechanische Justiereinrichtungen sind möglich und können eine definierte Einstellung der Lage des Sensorgesichtsfeldes zur Sensordrehachse gewährleisten,
- keine bzw. nur unwesentliche Einschränkungen bei der Wahl der Brennweite, insbesondere können auch relativ kurzbrennweitige Optiken verwendet werden, die wiederum kleine Ausgleichsbewegungen der Linearachsen und somit geringe Arbeitsraumeinschränkungen bei 5-Achstransformation bewirken.

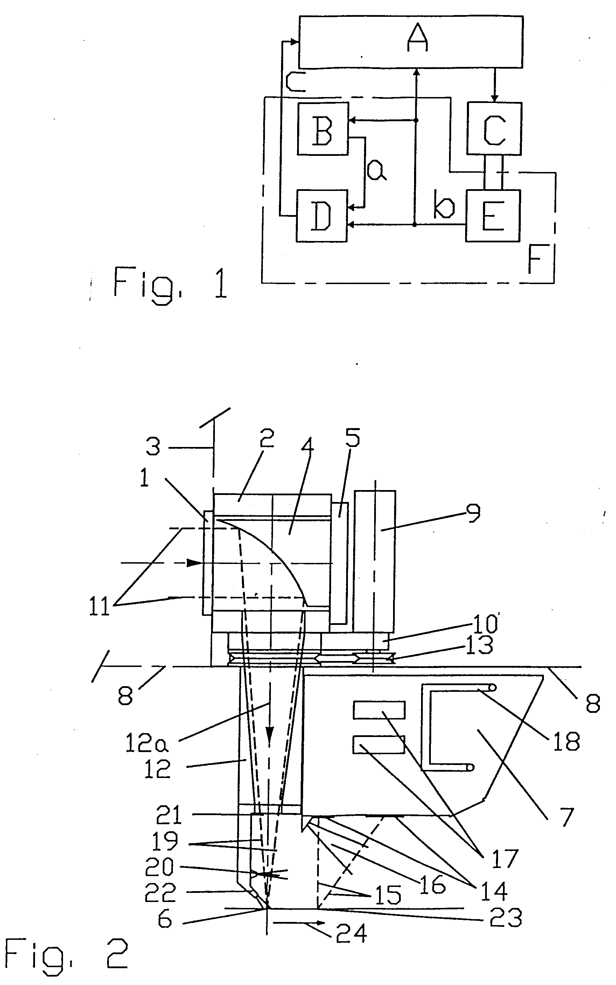

Der erfindungsgemäße kompakte Laserbearbeitungskopf, der in Fig. 1 mit F umrissen ist, soll nachfolgend anhand eines Ausführungsbeispieles näher erläutert werden. Dabei sind in Fig. 1 die on-line-Bahnkontrolle und in Fig. 2 eine Variante des erfindungsgemäßen kompakten Laserbearbeitungskopfes schematisch skizziert.

### Ausführungsbeispiel

In Fig. 1 ist die on-line-Bahnkontrolle dargestellt. Die vom Bearbeitungskopf E gemessenen Bahnistdaten werden der CNC-Steuerung A zur Realisierung der Geometrieerfassung und/oder der Konturverfolgung übergeben und gleichzeitig der Verarbeitungseinheit zugeführt. Im Ausführungsbeispiel ist dies ein Vergleicher D, der neben den Bahnistdaten b über die Bahnsolldaten a aus dem Protokollspeicher B verfügt. Die Bahnsolldaten a sind mit Hilfe eines Masterteils zuvor ermittelt worden. Mit Hilfe des Vergleichers D wird bei vorgebbarer Abweichung ein Fehlersignal an die Anlagensteuerung A generiert, wenn die Bahnistdaten b von den Bahnsolldaten a über das vorgegebene Maß abweichen.

Wie in Fig. 2 dargestellt ist über eine definierte Schnittstelle (1) das Spiegelgehäuse (2) am Strahlführungssystem (3) reproduzierbar befestigt. Der Spiegel (4) wird mit dem Gehäuse über einen Spiegelhalter (5) fixiert. Der Laserstrahl (11) wird mit dem Spiegel (4) um 90° umgelenkt und fokussiert.

Voraussetzung für die volle 3-D-Fähigkeit ist das Drehen des Sensors (7) zur Geometrieerfassung und/oder Konturverfolgung, um mindesten 360°. Dazu muß der Sensor (7) unter der Störkontur (8) der Strahlführung (3) hindurchgedreht werden. Der Antrieb erfolgt über einen NC-gesteuerten Motor (9). Der Motor einschließlich Nebeneinrichtungen ist auf einer separaten Motorplatine (10) am Spiegelgehäuse (2) befestigt. Diese Platine (10) läßt sich zum Spiegelgehäuse (2) und damit zum Laserstrahl (11) verschieben. Die Justage dieser Platine (10) zum Laserstrahl (11) hat so zu erfolgen, daß das Lot vom Tool-Center-Point (6), der identisch mit dem Zentrum des Arbeitspunkt (6) des Laserstrahles (11) ist, auf dem Drehzentrum (12a) der Drehachse (12) des Sensors (7) liegt. Im dargestellten Fall ist die Übereinstimmung des Lotes mit dem Drehzentrum (12a) bereits erfolgt.

Durch ein geeignetes Getriebe (13) erfolgt die Übertragung der Drehbewegung des Motors (9) auf die eigentliche Drehachse (12). An dieser ist der Sensor (7) schwenkbar befestigt. Die Austrittsfenster (14) des optischen Strahlenganges (15) des Sensors (7) werden durch einen Luftstrom (16), dem Crossjet, vor Dämpfen und Abprodukten geschützt. Die elektronischen und optischen Bauelemente (17) des Sensors (7) sind vor Überhitzung z.B. durch Rückstrahlung des Lasers, wie der Fokussierspiegel (4) mit einer Wasserkühlung (18) geschützt. Zum Schutz der optischen Bauelemente des Laserstrahlenganges (19) wird ein Crossjet (20) vor der Austrittsöffnung (21) erzeugt.

Über das gleiche System erfolgt die Zuführung des Prozeßgases zur Prozeßgasdüse (22) zur Bearbeitungsstelle. Der Vorlauf (24) der Abtastebene (23) gegenüber dem Bearbeitungspunkt (6) ist durch eine hier nicht weiter erläuterte Vorrichtung veränderbar. Einerseits darf der Abstand nicht zu weit aufgrund der Zunahme des Winkelfehlers der Senssordrehachse (12) sein, andererseits soll das Restrisiko einer Beeinträchtigung der Detektion durch den Bearbeitungsprozeß so gering wie möglich sein.

### Aufstellung der verwendeten Bezugszeichen und Begriffe

- A: Steuerung
- B: Protokollspeicher
- C: Lasermaschine
- D: Vergleicher
- E: Bearbeitungskopf
- F: Kompakter Laserbearbeitungskopf zur Lasermaterialbearbeitung mit integrierter on-line-Bahnkontrolle
- a: Solldaten
- b: Bahndaten
- c: Vergleichsergebnis
- 1: Schnittstelle zur Maschine
- 2: Spiegelgehäuse
- 3: Strahlführungssystem
- 4: Fokussierspiegel
- 5: Spiegelhalter
- 6: Tool-Center-Point bzw. Arbeitspunkt
- 7: Sensor zur Geometrieerfassung und/oder Konturverfolgung
- 8: Störkontur
- 9: NC-gesteuerter Motor
- 10: Motorplatine
- 11: Laserstrahl
- 12: Sensordrehachse
- 12a: Drehzentrum der Sensordrehachse
- 13: Getriebe
- 14: Austrittsfenster des optischen Strahlenganges
- 15: optischer Strahlengang
- 16: Luftstrom (Crossjet) zum Schutz des Austrittsfensters des optischen Strahlenganges
- 17: elektronische und optische Bauelemente des Sensors
- 18: Wasserkühlung
- 19: Laserstrahlengang
- 20: Crossjet zum Schutz der optischen Bauelemente des Laserstrahlenganges
- 21: Austrittsöffnung des Laserstrahlenganges
- 22: Prozeßgasdüse
- 23: Abtastebene
- 24: Vorlauf des Beobachtungspunktes

## Patentansprüche

1. Kompakter Laserbearbeitungskopf zur Lasermaterialbearbeitung mit integrierter on-line-Bahnkontrolle, insbesondere für lasergestützte Materialbearbeitungsverfahren, wie beispielsweise Schneiden, Schweißen, Oberflächenveredlungsverfahren mit CNC-gesteuerten Portalmaschinen bzw. Robotern, beispielsweise Portalrobotern, zur 2-D- und 3-D-Laserbearbeitung, bestehend aus einem Sensor (7) zur Geometrieerfassung und/oder Konturverfolgung, einem oder mehreren Spiegeln (4) und/oder Spiegelsystemen mit Spiegelgehäuse (2) und Spiegelhalte (5) zur Führung des Laserstrahls (11), einer definierten Schnittstelle (1) zum Strahlführungssystem (3) der Maschine, Einrichtungen und Anschlüssen für Wasserkühlung (18) und Prozeßgasführung (22), einem oder mehreren Crossjet-Systemen (16, 20), Justiereinrichtungen und Prozeß- bzw. Arbeitsgasdüsen (22), sowie auf ein Motorplatine montierten Antriebseinrichtungen zur Realisierung ein Drehbewegung des Sensors, wie ein NC-gesteuerter Motor (9) und Getriebe (13), sowie Strom-, Signal- und Medienleitungen, **dadurch gekennzeichnet,** daß der Sensor (7) vollständig konstruktiv mit in den Laserbearbeitungskopf integriert und gemeinsam mit anderen an die Bearbeitungsrichtung gebundenen Zusatzeinrichtungen des Laserbearbeitungskopfes um die Sensordrehachse (12) drehbar gelagert ist, der Laserbearbeitungskopf einen Protokollspeicher (B) und eine Vergleichereinheit (D) enthält, die derart angeordnet und verbunden sind, daß die Daten des Sensors (7) parallel zur Steuerung des Bearbeitungsvorganges mit den Daten eines Protokollspeichers (B) in einer Vergleichereinheit (D) zum Zwecke der Qualitätskontrolle und Beeinflussung des Bearbeitungsvorgangs verglichen und ausgewertet werden können.

2. Kompakter Laserbearbeitungskopf nach Anspruch 1, **dadurch gekennzeichnet,** daß zwischen dem Datenausgang des Sensors (7) und dem Dateneingang der Steuerung (A) bzw. dem Dateneingang der Vergleichereinheit (D) ein Bahnspeicher angeordnet ist, in welchem zur Erhöhung der Störsicherheit die Daten des Sensors (7) gespeichert und bewertet werden, bevor sie der Steuerung (A) und der Vergleichereinheit (D) zugeführt werden.

3. Kompakter Laserbearbeitungskopf nach Anspruch 1 oder 2, **dadurch gekennzeichnet,** daß der Eingang des Protokollspeichers (B) direkt mit den Sensordaten verbunden ist und somit der Inhalt des Protokollspeichers (B) von einem Masterteil bestimmt wird.

4. Kompakter Laserbearbeitungskopf nach einem oder mehreren der Anspüche von 1 bis 3, **dadurch gekennzeichnet,** daß der Protokollspeicher (B), die Vergleichereinheit (D) und/oder der Bahnspeicher mit der CNC-Steuerung verbunden werden können.

5. Kompakter Laserbearbeitungskopf nach einem oder mehreren der Ansprüche von 1 bis 4, **dadurch gekennzeichnet,** daß der Sensor (7) und die an die Bearbeitungsrichtung gebundenen Zusatzeinrichtungen des Laserbearbeitungskopfes um mindestens 360° drehbar um die Sensordrehachse (12) gelagert sind.

6. Kompakter Laserbearbeitungskopf nach einem oder mehreren der Ansprüchevon 1 bis 5, **dadurch gekennzeichnet,** daß die Sensordrehachse (12) definiert zur Laserstrahlaustrittachse angeordnet ist.

7. Kompakter Laserbearbeitungskopf nach Anspruch 6**, dadurch gekennzeichnet,** daß die Sensordrehachse (12) definiert zur Werkzeugachse derart angeordnet ist, daß diese mit dem Lot im Zentrum des Laserspots übereinstimmt.

8. Kompakter Laserbearbeitungskopf nach Anspruch 7, **dadurch gekennzeichnet,** daß die Sensordrehachse (12) derart angeordnet ist, daß sie räumlich durch Verschieben und/oder Verkippen zur Werkzeugachse justierbar ist.

9. Kompakter Laserbearbeitungskopf nach einem oder mehreren der Ansprüche von 1 bis 8, **dadurch gekennzeichnet,** daß der Sensor (7) zur Geometrieerfassung und/oder Konturverfolgung so angeordnet ist, daß er zur Sensordrehachse (12) justierbar ist.

10. Kompakter Laserbearbeitungskopf nach einem oder mehreren der Ansprüche von 1 bis 9, **dadurch gekennzeichnet,** daß der Sensor (7) zur Geometrieerfassung und/oder Konturverfolgung ein optoelektronischer Sensor ist.

11. Kompakter Laserbearbeitungskopf nach einem oder mehreren der Ansprüche von 1 bis 10**, dadurch gekennzeichnet,** daß die Bauelemente des Bearbeitungskopfes und die des Sensors (7) zur Geometrieerfassung und/oder Konturverfolgung so dimensioniert sind, daß die Schnittstelle (1) zur Maschine neben den für den Laserbearbeitungskopf notwendigen Funktionen auch die für den Sensor (7) enthält und alle Schutzmaßnahmen für die Optik, für die Bauelemente des Bearbeitungskopfes und für die Bauelemente des Sensors (7) gleichermaßen wirken.

12. Kompakter Laserbearbeitungskopf nach einem oder mehreren der Ansprüche von 1 bis 11, **dadurch gekennzeichnet,** daß an der Sensordrehachse (12) neben dem Sensor (7) zur Geometrieerfassung und/oder Konturverfolgung noch weitere Sensoren und Justageeinrichtungen befestigt sind.

## Claims

1. Compact laser machining head for laser material-processing with an integrated on-line path control system, especially for laser-supported macromaterial- processing methods, such as, for example, cutting, welding, surface refinement processes with CNC-controlled portal machines, or robots, e.g. portal robots, for two-dimensional and three-dimensional laser machining, consisting of a sensor (7) for geometry detection and/or contour tracing, one or more mirrors (4) and/or mirror systems with mirror housing (2) and mirror holding device (5) for guiding the laser beam (11), a defined interface (1) to the beam control system (3) of the machine, devices and connections for water cooling (18) and process gas flow control (22), one or more crossjet systems (16, 20), regulating devices and process gas jets or operating gas jets (22) as well as drive devices mounted on a motor board to effect a rotational movement of the sensor, such as an NC-controlled motor (9) and gearing (13), as well as lines for supplying current, signals and media, **characterised in that** the sensor (7) is constructionally completely integrated into the laser machining head and, together with other additional devices of the laser machining head tied to the direction of machining, mounted so as to be rotatable around the rotational axis of the sensor (12), the laser machining head contains a protocol storage device (B) and a comparator unit (D) which are disposed and connected in such a way that the data of the sensor (7) can be compared and evaluated parallel to the control of the machining process with the data from a protocol storage device (B) in a comparator unit (D) for the purposes of quality control and influencing the machining process.

2. Compact laser machining head according to claim 1, **characterised in that** a path storage device is disposed between the data exit of the sensor (7) and data entrance of the control system (A) and the data entrance of the comparator unit (D), in which device, in order to increase the immunity to interference, the data of the sensor (7) are stored and evaluated before they are passed to the control system (A) and the comparator unit (D).

3. Compact laser machining head according to claim 1 or 2, **characterised in that** the entrance of the protocol storage device (B) is directly connected with the sensor data and thus the contents of the protocol storage device (B) are determined by a master part.

4. Compact laser machining head according to one or more of claims 1 to 3, **characterised in that** the protocol storage device (B), the comparator unit (D) and/or the path storage device can be connected with the CNC control system.

5. Compact laser machining head according to one or more of claims 1 to 4, **characterised in that** the sensor (7) and the additional devices, tied to the direction of machining, of the laser machining head are mounted so as to be rotatable through at least 360° around the rotational axis of the sensor (12).

6. Compact laser machining head according to one or more of claims 1 to 5, **characterised in that** the rotational axis of the sensor (12) is arranged defined in relation to the exit axis of the laser beam.

7. Compact laser machining head according to claim 6, **characterised in that** the rotational axis of the sensor (12) is arranged defined in relation to the tool axis in such a way that the sensor rotational axis matches the perpendicular in the centre of the laser spot.

8. Compact laser machining head according to claim 7, **characterised in that** the rotational axis of the sensor (12) is disposed in such a way that it may be adjusted spatially by displacing and/or tilting in relation to the tool axis.

9. Compact laser machining head according to one or more of claims 1 to 8, **characterised in that** the sensor (7) for geometry detection and/or contour tracing is so arranged that it is adjustable in relation to the rotational axis of the sensor (12).

10. Compact laser machining head according to one or more of claims 1 to 9, **characterised in that** the sensor (7) for geometry detection and contour tracing is an optoelectronic sensor.

11. Compact laser machining head according to one or more of claims 1 to 10, **characterised in that** the components of the laser machining head and those of the sensor (7) for geometry detection and/or contour tracing are of such dimensions that the interface (1) to the machine, as well as the necessary functions for the laser machining head, also contains those necessary for the sensor (7) and all the protective measures for the lens system, for the components of the machining head and for the components of the sensor (7) act in the same way.

12. Compact laser machining head according to one or more of claims 1 to 11, **characterised in that** additional sensors and justifying devices are fastened to the rotational axis of the sensor (12) beside the sensor (7) for geometry detection and/or contour tracing.

## Revendications

1. Tête d'usinage au laser, compacte, pour l'usinage de matériaux au laser comprenant une commande de guidage en ligne intégrée, en particulier pour un procédé d'usinage de matériaux s'appuyant sur un laser, comme par exemple un découpage, un soudage, un traitement de surface avec des machines ou des robots à portique à commande numérique par calculateur, par exemple des robots à portique, servant à l'usinage au laser en deux dimensions ou en trois dimensions, consistant en un détecteur (7) servant à saisir les formes géométriques et/ou à suivre le contour, en un ou plusieurs miroirs (4) et/ou en des systèmes de miroirs avec un boîtier de miroir (2) et un support de miroir (5) servant à guider le rayon laser (11) d'une interface définie (1) pour le système de guidage (3) du rayon de la machine, en des dispositifs et des raccords pour le refroidissement à eau (18) et le guidage (22) des gaz du procédé, en un ou plusieurs systèmes de jets croisés (16, 20), en des dispositifs d'ajustage et des buses pour le procédé ou des buses (22) de travail, ainsi que des dispositifs d'entraînement, montés sur une platine du moteur, servant à réaliser un mouvement de rotation du détecteur, tel qu'un moteur (9) à commande numérique par calculateur et une transmission (13), ainsi que des lignes pour le courant, les signaux et des conduites pour les fluides,
caractérisée en ce que
• le détecteur (7) est complètement intégré par construction dans la tête d'usinage au laser et est monté en même temps que d'autres dispositifs additionnels, reliés au dispositif d'usinage, de la tête d'usinage au laser, de façon à pouvoir tourner autour de l'axe de rotation (12) du détecteur,
• la tête d'usinage au laser contient une mémoire de protocole (BV) et une unité de Comparaison (D), qui sont disposées et reliées de telle manière que les données du détecteur (7) peuvent être comparées et exploitées, en parallèle à la commande du processus d'usinage, avec les données d'une mémoire de protocole (B) dans une unité de comparaison (D) dans le but de contrôler la qualité et d'exercer une influence sur le processus d'usinage.

2. Tête d'usinage Compacte au laser selon la revendication 1,
caractérisé en ce que
l'on dispose entre la sortie des données du détecteur (7) et l'entrée des données de la commande (A) ou l'entrée des données de l'unité de comparaison (D) une mémoire de guidage, dans laquelle on met en mémoire les données du détecteur (7) pour augmenter la sécurité contre les perturbations, et on les évalue, avant qu'elles ne soient amenées à la commande (A) et à l'unité de comparaison (D).

3. Tête d'usinage compacte au laser selon la revendication 1 ou 2,
caractérisé en ce que
• l'entrée de la mémoire de protocole (B) est directement reliée aux données du détecteur et
• on détermine de cette façon le contenu de la mémoire du protocole (B) à l'aide d'une maître-pièce.

4. Tête d'usinage compacte au laser selon une ou plusieurs des revendications 1 à 3,
caractérisé en ce que
la mémoire de protocole (B), l'unité de comparaison (D) et/ou la mémoire de guidage peuvent être reliées à la commande numérique par calculateur.

5. Tête d'usinage compacte au laser selon une ou plusieurs des revendications 1 à 4,
caractérisé en ce que
le détecteur (7) et les dispositifs additionnels, liés au sens de l'usinage, de la tête d'usinage au laser sont montés de façon à pouvoir tourner d'au moins 360° autour de l'axe de rotation du détecteur (12).

6. Tête d'usinage compacte au laser selon une ou plusieurs des revendications 1 à 5,
caractérisé en ce que
l'axe de rotation du détecteur (12) est disposé de façon définie par rapport à l'axe de sortie du rayon laser.

7. Tête d'usinage compacte au laser selon la revendication 6,
caractérisé en ce que
l'axe de rotation (12) du détecteur est disposé de façon définie par rapport à l'axe de l'outil d'une manière telle que celui-ci coïncide avec la verticale au centre du spot du laser.

8. Tête d'usinage compacte au laser selon la revendication 7,
caractérisé en ce que
l'axe de rotation (12) du détecteur est disposé d'une manière telle que l'on peut l'ajuster dans l'espace en le faisant coulisser et/ou basculer par rapport à l'axe de l'outil.

9. Tête d'usinage compacte au laser selon une ou plusieurs des revendications 1 à 8,
caractérisé en ce que
le détecteur (7) est disposé pour saisir les formes géométriques et/ou suivre le contour de telle façon que l'on puisse l'ajuster par rapport à l'axe de rotation (12) du détecteur.

10. Tête d'usinage Compacte au laser selon une ou plusieurs des revendications 1 à 9,
caractérisé en ce que
le détecteur (7) servant à saisir les formes géométriques et/ou à suivre le contour est un détecteur opto-électronique.

11. Tête d'usinage compacte au laser selon une ou plusieurs des revendications 1 à 10,
caractérisé en ce que
• les composants de la tête d'usinage et ceux du détecteur (7) servant à saisir les formes géométriques et/ou à suivre le contour sont dimensionnés de telle manière que l'interface (1) par rapport à la machine contienne en plus des fonctions qui sont nécessaires à la tête d'usinage au laser aussi celles qui sont nécessaires pour le détecteur (7) et
• toutes les mesures de protection pour l'optique, pour les composants de la tête d'usinage au laser et pour les composants du détecteur (7) agissent de la même manière.

12. Tête d'usinage compacte au laser selon une ou plusieurs des revendications 1 à 11,
caractérisé en ce qu'
on fixe sur l'axe de rotation (12) du détecteur en plus du détecteur (7) servant à saisir les formes géométriques et/ou à suivre le contour encore d'autres détecteurs et dispositifs d'ajustage.
